(19) Europäisches Patentamt
European Patent Office
Office européen des brevets

(11) **EP 4 383 158 A1**

(12) **EUROPEAN PATENT APPLICATION**

(43) Date of publication:
**12.06.2024 Bulletin 2024/24**

(21) Application number: **23204950.2**

(22) Date of filing: **20.10.2023**

(51) International Patent Classification (IPC):
**G06Q 10/04** (2023.01)    **G06Q 30/0201** (2023.01)
**G06Q 30/0283** (2023.01)

(52) Cooperative Patent Classification (CPC):
**G06Q 30/0206; G06Q 30/0207; G06Q 30/0223;
G06Q 30/0234; G06Q 30/0283**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **05.12.2022 IN 202221070162**

(71) Applicant: **Tata Consultancy Services Limited
Maharashtra (IN)**

(72) Inventors:
• **KUMAR, SUMAN
411057 Pune, Maharashtra (IN)**

• **SARKAR, SIDDHARTHA
411057 Pune, Maharashtra (IN)**
• **SHAW, AVISHEK Kumar
700160 Parganas, Kolkata (IN)**
• **PANAPARAMBIL UNNIKRISHNAN,
KRISHNANUGRAH
682042 Kochi, Kerala (IN)**
• **BALARAMAN, VIVEK
411006 Pune, Maharashtra (IN)**

(74) Representative: **Goddar, Heinz J.
Boehmert & Boehmert
Anwaltspartnerschaft mbB
Pettenkoferstrasse 22
80336 München (DE)**

(54) **METHOD AND SYSTEM FOR ESTIMATION OF OPTIMAL MARKDOWN PRICING BASED ON CUSTOMER REGRET**

(57)    This disclosure relates generally to estimation of optimal markdown pricing based on customer regret. Pricing is a core aspect of any retail industry, and one of the pricing strategies used by retailers to attract customers is price reduction, wherein a seasonal product is sold at a markdown price after a predictable regular sale. The existing techniques for estimating an optimal markdown price are limited to factors such as market competition, and retailer formats and do not gain deeper understanding of customers' reactions nor explicitly utilizes inventory data. The disclosure estimates optimal markdown pricing in several steps including estimation of a set of behavioral model parameters comprising a customer regret parameter and a set of reservation price parameters, determining a markdown demand, and estimating the optimal markdown price using the markdown demand and inventory data.

FIG. 2

**Description**

CROSS-REFERENCE TO RELATED APPLICATIONS AND PRIORITY

The present application claims priority to Indian application number 202221070162, filed on December 05, 2022.

TECHNICAL FIELD

The disclosure herein generally relates to an estimation of optimal markdown pricing and, more particularly, a system and method for estimation of an optimal markdown pricing based on a customer regret.

BACKGROUND

Pricing is a core aspect of any retail industry, that sells products to customers. As the retail industry is often characterized by slim profit margins, pricing is one of the most powerful ways to attract shunning customers and increase profitability. Hence it is necessary to implement a pricing strategy for retailers to compete and make profit in the market. The success of the pricing strategy implementation depends on several factors, such as target customer, market competition, retailer formats, etc.

One of the pricing strategies used by retailers to attract customers is price reduction, wherein a seasonal product is sold at a markdown price after a predictable regular sale. Hence, the retailer's plan for seasonal products will include both a regular pricing and a post-season clearance markdown price to achieve maximum sales revenues for the entire item life cycle or entire season.

The existing techniques for estimating an optimal markdown price are limited to factors such as market competition, and retailer formats. The existing state-of-art techniques are limited and do not gain deeper understanding of customers' strategic reactions and emotional reactions to retailers' pricing structure, customer characteristics and behavior nor is does any state-of-art technique explicitly utilize inventory data. Hence, there is a need for a technique to consider the above factors while estimating the optimal markdown price of seasonal products, such as fashion goods.

SUMMARY

Embodiments of the present disclosure present technological improvements as solutions to one or more of the above-mentioned technical problems recognized by the inventors in conventional systems. For example, in one embodiment, a system for estimation of an optimal markdown pricing based on a customer regret is provided.

The system includes a memory storing instructions, one or more communication interfaces, and one or more hardware processors coupled to the memory via the one or more communication interfaces, wherein the one or more hardware processors are configured by the instructions to receive a plurality of inputs from a plurality of sources, via one or more hardware processors, wherein the plurality of inputs is associated with seasonal fashion apparels and comprises a set of transactional information and a plurality of product information associated with a plurality of products for a current regular period, a historic regular period and a historic markdown period, a fitness threshold, a markdown sale criteria, and an inventory data. The system is further configured for identifying a first set of products using the plurality of inputs based on a fitness score via the one or more hardware processors, wherein the first set of products comprises of seasonal fashion apparels sold in the historic regular period and the historic markdown period. The system is further configured for identifying a set of similar products from the first set of products, via the one or more hardware processors, based on a binary mapping technique using the plurality of product information from the current regular period. The system is further configured for estimating a set of behavioral model parameters using the set of similar products, via the one or more hardware processors, wherein the set of behavioral model parameters comprises a customer regret parameter and a set of reservation price parameters. The system is further configured for updating the set of reservation price parameters to obtain a set of scaled reservation price parameters and a potential market size, via the one or more hardware processors, using the plurality of product information for the current regular period and the historic regular period based on a scaling technique. The system is further configured for determining a markdown demand for the plurality of products of the current regular period, via the one or more hardware processors, using the set of scaled distribution parameters, the potential market size, and the customer regret parameter. The system is further configured for estimating an optimal markdown price for the plurality of products of the current regular period, via the one or more hardware processors, using the markdown demand and the inventory data.

In another aspect, a method for estimation of an optimal markdown pricing based on a customer regret is provided. The method includes receiving a plurality of inputs from a plurality of sources wherein the plurality of inputs is associated with seasonal fashion apparels and comprises a set of transactional information and a plurality of product information associated with a plurality of products for a current regular period, a historic regular period and a historic markdown period, a fitness threshold, a markdown sale criteria, and an inventory data. The method further includes identifying a first set of products using the plurality of inputs based on a fitness score, wherein the identified first set of products comprises of seasonal fashion apparels sold in the historic regular period and the historic markdown period. The method further includes identifying a set of similar products from the first set of products based on a binary mapping technique using the plurality of product information from the current regular period. The method further includes estimating a set of behavioral model parameters using the set of similar products wherein the set of behavioral model parameters comprises a customer regret parameter and a set of reservation price parameters. The method further includes updating the set of reservation price parameters to obtain a set of scaled reservation price parameters and a potential market size using the plurality of product information for the current regular period and the historic regular period based on a scaling technique. The method further includes determining a markdown demand for the plurality of products of the current regular period using the set of scaled distribution parameters, the potential market size and the customer regret parameter. The method further includes estimating an optimal markdown price for the plurality of products of the current regular period using the markdown demand and the inventory data.

In yet another aspect, a non-transitory computer readable medium is provided comprising one or more instructions, which when executed by one or more hardware processors causes a method for estimation of an optimal markdown pricing based on a customer regret. The method includes receiving a plurality of inputs from a plurality of sources wherein the plurality of inputs is associated with seasonal fashion apparels and comprises a set of transactional information and a plurality of product information associated with a plurality of products for a current regular period, a historic regular period and a historic markdown period, a fitness threshold, a markdown sale criteria, and an inventory data. The method further includes identifying a first set of products using the plurality of inputs based on a fitness score, wherein the first set of products comprises of seasonal fashion apparels sold in the historic regular period and the historic markdown period. The method further includes identifying a set of similar products from the first set of products based on a binary mapping technique using the plurality of product information from the current regular period. The method further includes estimating a set of behavioral model parameters using the set of similar products wherein the set of behavioral model parameters comprises a customer regret parameter and a set of reservation price parameters. The method further includes updating the set of reservation price parameters to obtain a set of scaled reservation price parameters and a potential market size using the plurality of product information for the current regular period and the historic regular period based on a scaling technique. The method further includes determining a markdown demand for the plurality of products of the current regular period using the set of scaled distribution parameters, the potential market size and the customer regret parameter. The method further includes estimating an optimal markdown price for the plurality of products of the current regular period using the markdown demand and the inventory data.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG.1 illustrates an exemplary system for estimation of an optimal markdown pricing based on customer regret, according to some embodiments of the present disclosure.
FIG.2 is a functional block diagram for estimation of optimal markdown pricing based on customer regret, according to some embodiments of the present disclosure.
FIG.3A and FIG.3B is a flow diagram illustrating a method (300) for estimation of an optimal markdown pricing based on a customer regret, in accordance with some embodiments of the present disclosure.
FIG.4 is a flow diagram (400) illustrating the method (300) for identification of the first set of products during estimation of optimal markdown pricing based on customer regret, in accordance with some embodiments of the present disclosure.
FIG.5 is a flow diagram (500) illustrating the method (300) for estimation of the set of behavioral model parameters during estimation of optimal markdown pricing based on customer regret, in accordance with some embodiments of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Customers are regret-prone, and anticipation of regret affects a customer's purchase decisions. Customers experience high price regret when they miss an opportunity to purchase products at low price and stockout regret when they are unable to purchase products due to stockouts. Hence, under the intensity of such regret, rationalizing the identification of optimal markdown pricing of seasonal products under inventory concerns should also be considered along with customer's regret.

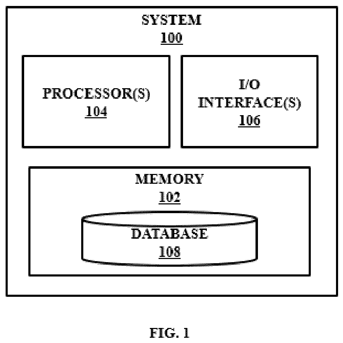

Referring now to the drawings, and more particularly to FIG. 1 through FIG.5, where similar reference characters denote corresponding features consistently throughout the figures, there are shown preferred embodiments and these embodiments are described in the context of the following exemplary system and/or method.

FIG. 1 is an exemplary block diagram of a system 100 for estimation of an optimal markdown pricing based on a customer regret in accordance with some embodiments of the present disclosure.

In an embodiment, the system 100 includes a processor(s) 104, communication interface device(s), alternatively referred as input/output (I/O) interface(s) 106, and one or more data storage devices or a memory 102 operatively coupled to the processor(s) 104. The system 100 with one or more hardware processors is configured to execute functions of one or more functional blocks of the system 100.

Referring to the components of the system 100, in an embodiment, the processor(s) 104, can be one or more hardware processors 104. In the preferred embodiment, the one or more hardware processors 104 can be implemented as one or more microprocessors, microcomputers, microcontrollers, digital signal processors, central processing units, state machines, logic circuitries, and/or any devices that manipulate signals based on operational instructions. Among other capabilities, the one or more hardware processors 104 is configured to fetch and execute computer-readable instructions stored in the memory 102. The system 100 can be implemented in a variety of computing systems including laptop computers, notebooks, hand-held devices such as mobile phones, workstations, mainframe computers, servers, a network cloud and the like.

The I/O interface(s) 106 can include a variety of software and hardware interfaces, for example, a web interface, a graphical user interface, a touch user interface (TUI) and the like and can facilitate multiple communications within a wide variety of networks N/W and protocol types, including wired networks, for example, LAN, cable, etc., and wireless networks, such as WLAN, cellular, or satellite. In an embodiment, the I/O interface (s) 106 can include one or more ports for connecting a number of devices (nodes) of the system 100 to one another or to another server.

The memory 102 may include any computer-readable medium known in the art including, for example, volatile memory, such as static random-access memory (SRAM) and dynamic random-access memory (DRAM), and/or non-volatile memory, such as read only memory (ROM), erasable programmable ROM, flash memories, hard disks, optical disks, and magnetic tapes.

Further, the memory 102 may include a database 108 configured to include information regarding estimation of optimal markdown pricing based on customer regret. The memory 102 may comprise information pertaining to input(s)/output(s) of each step performed by the processor(s) 104 of the system 100 and methods of the present disclosure. In an embodiment, the database 108 may be external (not shown) to the system 100 and coupled to the system via the I/O interface 106.

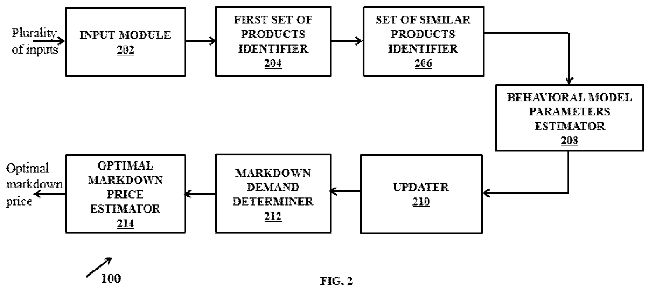

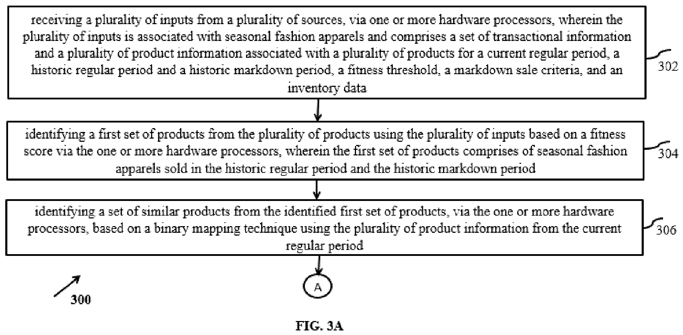

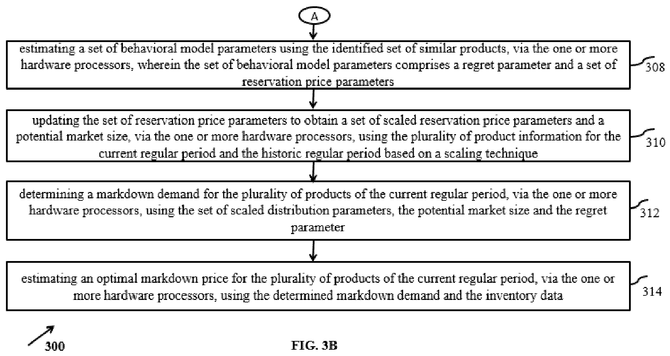

Functions of the components of system 100 are explained in conjunction with functional overview of the system 100 in FIG.2 and flow diagram of FIG.3A and FIG.3B for estimation of the optimal markdown pricing based on the customer regret.

The system 100 supports various connectivity options such as BLUETOOTH®, USB, ZigBee and other cellular services. The network environment enables connection of various components of the system 100 using any communication link including Internet, WAN, MAN, and so on. In an exemplary embodiment, the system 100 is implemented to operate as a stand-alone device. In another embodiment, the system 100 may be implemented to work as a loosely coupled device to a smart computing environment. The components and functionalities of the system 100 are described further in detail.

FIG.2 is an example functional block diagram of the various modules of the system 100 of FIG.1, in accordance with some embodiments of the present disclosure. As depicted in the architecture, the FIG.2 illustrates the functions of the modules of the system 100 that includes for estimation of the optimal markdown pricing based on the customer regret.

As depicted in FIG.2, the functional block diagram 200 of the system 100 is configured for estimation of optimal markdown pricing based on customer regret.

The system 100 comprises an input module 202 configured for receiving a plurality of inputs from a plurality of sources, wherein the plurality of inputs is associated with seasonal fashion apparels. The system 100 further comprises a first set of products identifier 204 configured for identifying a first set of products using the plurality of inputs based on a fitness score. The system 100 further comprises a set of similar products identifier 206 configured for identifying a set of similar products from the first set of products based on a binary mapping technique. The system 100 further comprises a behavioral model parameters estimator 208 configured for estimating a set of behavioral model parameters using the set of similar products. The set of behavioral model parameters comprises a customer regret parameter and a set of reservation price parameters. The system 100 further comprises an updater 210 configured for updating the set of reservation price parameters to obtain a set of scaled reservation price parameters and a potential market size. The system 100 further comprises a markdown demand determiner 212 configured for determining a markdown demand for the plurality of products of the current regular period. The system 100 further comprises a optimal markdown price estimator 214 configured for estimating an optimal markdown price for the plurality of products of the current regular period.

The various modules of the system 100 and the functional blocks in FIG.2 are configured for estimation of the optimal markdown pricing based on the customer regret are implemented as at least one of a logically self-contained part of a software program, a self-contained hardware component, and/or, a self-contained hardware component with a logically self-contained part of a software program embedded into each of the hardware component that when executed perform the above method described herein.

Functions of the components of the system 100 are explained in conjunction with functional modules of the system 100 stored in the memory 102 and further explained in conjunction with flow diagram of FIGS.3A-3B. The FIGS.3A-3B with reference to FIG.1, is an exemplary flow diagram illustrating a method 300 for estimation of the optimal markdown pricing based on the customer regret using the system 100 of FIG. 1 according to an embodiment of the present disclosure.

The steps of the method of the present disclosure will now be explained with reference to the components of the system 100 of FIG. 1 for estimation of optimal markdown pricing based on customer regret and the modules 202-214 as depicted in FIG.2 and the flow diagrams as depicted in FIGS.3A-3B. Although process steps, method steps, techniques or the like may be described in a sequential order, such processes, methods and techniques may be configured to work in alternate orders. In other words, any sequence or order of steps that may be described does not necessarily indicate a requirement that the steps to be performed in that order. The steps of processes described herein may be performed in any order practical. Further, some steps may be performed simultaneously.

Initially, at step 302 of the method 300, a plurality of inputs is received from a plurality of sources at the input module 202. The plurality of inputs is associated with seasonal fashion apparels.

The plurality of inputs comprises a set of transactional information and a plurality of product information associated with a plurality of products for a current regular period, a historic regular period and a historic markdown period, a fitness threshold, a markdown sale criteria, and an inventory data.

The regular period refers to a first-time duration when the plurality of product of seasonal fashion apparels are available at a base price and the markdown period refers to a second time duration when the plurality of product of seasonal fashion apparels are available at a discounted price. The base price is a price of the product before it is marked down permanently.

In an embodiment, the set of transactional information comprises several attributes including a transaction date, a product id, a price, a quantity, household/consumer id and a store id. The transaction date is a date of a transaction, a the product id is a key identifier of a product purchased during the transaction, the price is a price at which product was purchased during the transaction, the quantity is a quantity of the product purchased during the transaction by a consumer, the household/consumer id is a key identifier for the consumer who purchased the product and the store id is a key identifier for the store/shop from where the product was purchased.

The plurality of product information comprises several attributes including a product identification (ID), an item description, a price, a brand name, a season, a gender, a product size, and a product category/subcategory. The product Id is a key identifier of the product purchased during the transaction, the item description is the name of the product, the brand name is a brand of the product, the price is the current day price of the product, the season is the specific season for which the product is sold such as summer, Fall, spring, etc. The gender is the assigned gender for the product, the product size is the size of the product and the product category/subcategory specifies product category for the product.

At step 304 of the method 300, a first set of products is identified using the plurality of inputs at the first set of products identifier 204. The first set of products is identified based on a fitness score. The first set of products comprises of seasonal fashion apparels sold in the historic regular period and the historic markdown period.

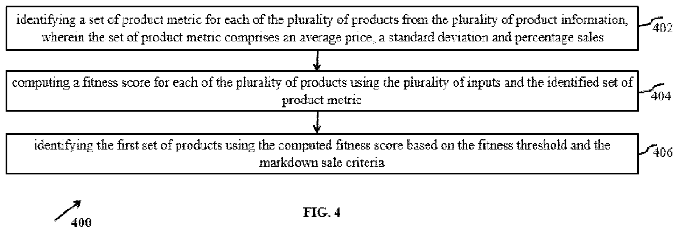

In another embodiment, the first set of products are identified using several steps as illustrated in the flowchart 400 of FIG.4.

At step 402 of the flowchart 400, a set of product metric is identified for each product from the plurality of product information. The set of product metric comprises an average price, a standard deviation and percentage sales.

In the preferred embodiment, for each product, the set of product metric is identified, wherein the set of product metric comprises below details:

 a) Regular Price ($P_r$), calculated as the mean of the selling prices in the historic regular period,
 b) Markdown Price ($P_m$), calculated as the mean of the selling prices in the historic markdown period,
 c) Standard deviation during the historic regular period ($SD_r$), calculated as the standard deviation of the selling price in the historic regular period,
 d) Standard deviation during the historic markdown period ($SD_m$), calculated as the standard deviation of the selling price in the historic markdown period, and

e) $Sale\_perc_m$ is calculated as part of a total sales (in percentage) that was sold in the historic markdown period.

At step 404 of the flowchart 400, a fitness score is computed for each product. The fitness score is computed using the plurality of inputs and the set of product metric

In the preferred embodiment, the fitness score for each product is computed based on the below equation:

$$fitness_{score} = \frac{c_1}{SD_r} + \frac{c_2}{SD_m} + c_3 * (P_r - P_m) \qquad (1)$$

wherein,

$c1$, $c2$ and $c3$ are a set of pre-defined coefficients,
$SD_r$ is the standard deviation of the price in the historic regular period,
$SD_m$ is the standard deviation of the price in the historic markdown period,
$P_r$ is the average price in the historic regular period, and
$P_m$ is the average price in the historic markdown period.

At step 406 of the flowchart 400, the first set of products is identified using the fitness score based on the fitness threshold and the markdown sale criteria.

In the preferred embodiment, the fitness threshold is a predefined scalar value used to compare against fitness score to aid the selection or identification of first set of products and the markdown sale criteria is a selection process for products from the first set of products based on comparison of markdown sales between a predefined scalar lower limit value of sales, a $Min.\ Sale\_perc_m$ and a predefined upper limit value of sales, and a $Max.Sale\_perc_m$.

The first set of products is identified based on the fitness threshold and the markdown sale criteria as shown below:

$$fitness_{score} > fitness_{threshold}$$

$$Min.Sale\_perc_m < Sale\_perc_m < Max.Sale\_perc_m \qquad (2)$$

In an example scenario, based on heuristic experiments, the predefined values for the set of pre-defined coefficients ($c_1$, $c_2$ and $c_3$ ), the fitness threshold and the markdown sale criteria can be as listed below:

i) $c_1 = 1$
ii) $c_2 = 1$
iii) $c_3 = 1$
iv) $fitness_{threshold} = 5$
v) $Min.Markdown_{sale} = 30$
vi) $Max.\ Markdown_{sale} = 50$

Referring to FIG.3A, at step 306 of the method 300, a set of similar products is identified from the first set of products in the set of similar products identifier 206. The set of similar products is identified based on a binary mapping technique using the plurality of product information from the current regular period.

In the preferred embodiment, the binary mapping technique comprises of assigning an attribute matching score based on a comparison between the first set of products and the plurality of product from the current regular period. The attribute matching score is assigned based on a season attribute, a gender attribute, a category attribute, a sub-category attribute, an item description attribute and a price attribute.

The binary mapping technique identifies a set of similar products from the historic regular period and the historic markdown period for the products sold in the current regular period based on attribute matching score.

In item description match, a 'Cosine Score' is computed as a cosine distance between the description of the products. In price match, a "Price Difference" which is the absolute difference between the price of both the products is computed to calculate the 'Price Score' as follows:

$$Price_{score} = \frac{1}{1 + Price_{difference}} \qquad (3)$$

wherein,

$Price_{difference}$ is absolute difference between the prices

Further, based on above computed values, a weightage ($W_i$) is assigned to each of the identified set of similar products:

$$W_i = (w1 * Price_{score}) + (w2 * Cosine_{score}) \qquad (4)$$

wherein,

w1 is the weightage value assigned to $Price_{score}$, and
w2 is the weightage value assigned to $Cosine_{score}$

Based on the weightage the set of similar products is identified for a given product.

At step 308 of the method 300, a set of behavioral model parameters is estimated using the set of similar products in the behavioral model parameters estimator 208. The set of behavioral model parameters comprises a customer regret parameter and a set of reservation price parameters.

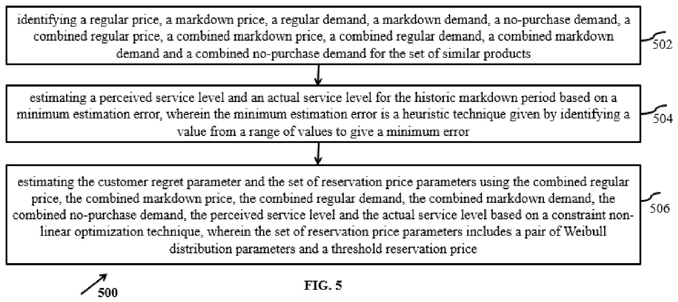

In an embodiment, the set of behavioral model parameters is estimated using several steps as illustrated in the flowchart (500) of FIG.5.

At step 502 of the flowchart 500, a regular price, a markdown price, a regular demand, a markdown demand, a no-purchase demand, a combined regular price, a combined markdown price, a combined regular demand, a combined markdown demand and a combined no-purchase demand is identified for a set of similar products.

The regular demand ($N_r$) refers to the number of customers who purchase during regular period. The markdown demand ($N_m$) refers to the number of customers who purchase during markdown period. The No-purchase demand ($N_0$) refers to the number of customers who visited the store, inspected the product but chose not to buy.

In an embodiment, a combined regular price ($\overline{P}_r$) is calculated as a weighted mean of the regular prices ($P_r$) of similar products, where the weights are identified from the equation.4 Similarly, a combined markdown price ($\overline{P}_m$) calculated as a weighted mean of the markdown prices ($P_r$) of similar products.

$$\overline{P_r} = \sum_{i=1}^{k} W_i(P_{r,i}), \qquad (5)$$

$$\overline{P_m} = \sum_{i=1}^{k} W_i(P_{m,i}) \qquad (6)$$

wherein,

$k$ is the total number of similar products, and
$W_i$ is the weightage assigned to similar products.

In an embodiment, the combined regular demand ($\overline{N}_r$) is calculated as a weighted mean of regular demand ($N_r$) wherein the weights are identified from the equation.4 and combined markdown demand ($\overline{N}_m$) is as a weighted mean of markdown demand of similar products, where markdown demand is identified using the actual service level ($r$) and sales in the historic markdown period, wherein the actual service level is the fraction of demand that the retailer can satisfy in the historic markdown period The combined no-purchase demand ($\overline{N}_0$) is estimated from multiplying a factor ($Q$) with the sum of combined regular demand ($\overline{N}_r$) and combined markdown demand ($\overline{N}_m$) as expressed below:

$$\bar{N}_r = \sum_{i=1}^{K} W_i(N_{r,i}), \qquad (7)$$

$$\bar{N}_m = \sum_{i=1}^{K} W_i(N_{m,i}),$$

$$N_m = \frac{sales\ in\ markdown\ period}{r}$$

$$\bar{N}_0 = Q(\bar{N}_r + \bar{N}_m)$$

wherein,

$k$ is the total number of similar products, and
$W_i$ is the weightage assigned to similar products.

At step 504 of the flowchart 500, a perceived service level and an actual service level is estimated for the historic markdown period. The perceived service level is the customer assumed probability that a product will be available during the historic markdown period. The perceived service level and the actual service level is estimated based on a minimum estimation error.

The minimum estimation error is a heuristic technique given by identifying a value from a range of values to give a minimum error.

$$\tilde{r} = \underset{r \in [0.4, 0.9]}{\arg\min}\ est.\,error(r) \qquad (8)$$

wherein,

$\tilde{r}$ is the estimated service level, and
$est.\,error(r)$ is the estimation error for a value of service level $r$.

In an embodiment, the perceived service level is calculated via the probability weighting function

$$s = r^\theta / \left[ r^\theta + (1-r)^\theta \right]^{(1-\theta)} \qquad (9)$$

wherein,

$s$ is the estimated service level,
$r$ is the service level, and
$\theta$ is a deviation parameter.

At step 506 of the flowchart 500, the customer regret parameter and the set of reservation price parameters is estimated based on a constraint non-linear optimization technique. The set of reservation price parameters includes a pair of Weibull distribution parameters ($\lambda$, $k$) and a threshold reservation price ($v_1$).

The customer regret parameter and the set of reservation price parameters is estimated using the combined regular price, the combined markdown price, the combined regular demand, the combined markdown demand, the combined no-purchase demand, the perceived service level and the actual service level based on a constraint non-linear optimization technique.

In an embodiment, the parameter estimation problem can be formulated as a maximum log-likelihood estimation problem based on the three demands (combined regular, combined markdown and combined No-purchase), which is solved via the constraint non-linear optimization technique as expressed below:

$$\underset{\lambda \geq 0, k \geq 0, \eta \geq 0}{\text{Max}} \; \bar{N}_0 \log\bigl(F(\delta P_r)\bigr) + \bar{N}_m \log\bigl(F(v_1) - F(\delta P_r)\bigr) + \bar{N}_r \log\bigl(\bar{F}(v_1)\bigr) \qquad (10)$$

$$\text{s.t., } v_1 = \left[ \eta \frac{(1-\delta)}{(1-s)} + 1 \right] P_r$$

wherein,

$F(x) = 1 - e^{-(x/\lambda)^k}$ is the cumulative distribution function of the reservation price,
$\bar{F}(x) = 1 - F(x)$,
$v_1$ is threshold reservation price,
$\bar{N}_0$ is combined no purchase demand,
$\bar{N}_m$ is combined markdown demand,
$\bar{N}_r$ is combined regular demand, and
$\bar{P}_r$ is the combined regular price.

Referring to FIG.3B, at the step 310 of the method 300, the set of reservation price parameters is updated based on a scaling technique at the updater 210. The set of reservation price parameters is updated to obtain a set of scaled reservation price parameters and a potential market size. The set of scaled reservation price parameters and the potential market size is obtained using the plurality of product information for the current regular period and the historic regular period.

The scale factor is a ratio between price of current regular period and the historic regular period.

In an embodiment, the scaling technique comprises of multiplying the scale factor with the set of reservation price parameters to obtain a set of scaled reservation price parameters and a potential market size. The scaling technique comprises of multiplying a scale factor (the ratio between price of current regular period and the historic regular period) to obtain the scaled threshold reservation price $v_{1new}$ (Equation 11), and Weibull distribution parameter, $\lambda_{new}$ (Equation 12). Also, the potential market size ($N_{new}$) is calculated based on the current regular period demand ($N_{new}$), and scaled parameters ($\lambda_{new}$, $v_{1new}$) as in the Equation 13.

$$v_{1_{new}} = v_{1_{old}} * (P_{r,new} / P_{r,old}) \qquad (11)$$

$$\lambda_{new} = \lambda_{old} * (P_{r,new} / P_{r,old}) \qquad (12)$$

$$N_{new} = \frac{N_r\_new}{e^{-\left(\frac{v_{1new}}{\lambda_{new}}\right)^k}} \qquad (13)$$

At step 312 of the method 300, a markdown demand is determined for the plurality of products of the current regular period at the markdown demand determiner 212. The markdown demand is determined using the set of scaled reservation price parameters, the potential market size and the customer regret parameter.

In an embodiment, the markdown demand is determined as follows:

$$N_m(P_m) = N_{new}\bigl(F(v_{1_{new}}) - F(P_m)\bigr) = N_{new}\left(e^{-\left(\frac{P_m}{\lambda_{new}}\right)^k} - e^{-\left(\frac{v_{1new}}{\lambda_{new}}\right)^k}\right) \qquad (14)$$

wherein,

$N_m$ is the markdown demand,
$P_m$ is the markdown price,
$N_{new}$ is the potential market size,
$F(x) = 1 - e^{-(x/\lambda_{new})^k}$ is the cumulative distribution function of the reservation price,
$\lambda_{new}$ and $k$ are Weibull distribution parameters, and
$v_{1_{new}}$ is the threshold reservation price.

At step 314 of the method 300, an optimal markdown price is estimated for the plurality of products of the current regular period in the optimal markdown price estimator 214. The optimal markdown price is estimated using the markdown demand and the inventory data.

In an embodiment, the optimal markdown price is estimated as the price for which the markdown demand formulation ($N_m$) become equal to the inventory remaining at markdown ($I_m$) obtained from the inventory data.

$$N_{new}(\mathrm{e}^{-\left(\frac{P_m}{\lambda_{new}}\right)^k} - \mathrm{e}^{-\left(\frac{v_{1new}}{\lambda_{new}}\right)^k}) = I_m \qquad (15)$$

The above nonlinear equation (equation 15) is solved based on root finding algorithms including a Gauss-Newton method.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

This disclosure relates generally to an estimation of an optimal markdown pricing based on a customer regret. Pricing is a core aspect of any retail industry, and one of the pricing strategies used by retailers to attract customers is price reduction, wherein a seasonal product is sold at a markdown price after a predictable regular sale. The existing techniques for estimating an optimal markdown price are limited to factors such as market competition, and retailer formats and do not gain deeper understanding of customers' reactions nor explicitly utilizes inventory data. The disclosure estimates optimal markdown pricing in several steps including estimation of a set of behavioral model parameters comprising a customer regret parameter and a set of reservation price parameters, determining a markdown demand, and estimating the optimal markdown price using the markdown demand and inventory data.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

1. A processor-implemented method (300) comprising steps of

receiving a plurality of inputs from a plurality of sources, via one or more hardware processors, wherein the plurality of inputs is associated with seasonal fashion apparels and comprises a set of transactional information and a plurality of product information associated with a plurality of products for a current regular period, a historic regular period and a historic markdown period, a fitness threshold, a markdown sale criteria, and an inventory data (302);
identifying a first set of products from the plurality of products using the plurality of inputs based on a fitness score via the one or more hardware processors, wherein the first set of products comprises of seasonal fashion apparels sold in the historic regular period and the historic markdown period (304);
identifying a set of similar products from the identified first set of products, via the one or more hardware processors, based on a binary mapping technique using the plurality of product information from the current regular period (306);
estimating a set of behavioral model parameters using the identified set of similar products, via the one or more hardware processors, wherein the set of behavioral model parameters comprises a customer regret parameter and a set of reservation price parameters (308);
updating the set of reservation price parameters to obtain a set of scaled reservation price parameters and a potential market size, via the one or more hardware processors, using the plurality of product information for the current regular period and the historic regular period based on a scaling technique (310);
determining a markdown demand for the plurality of products of the current regular period, via the one or more hardware processors, using the set of scaled distribution parameters, the potential market size and the customer regret parameter (312); and
estimating an optimal markdown price for the plurality of products of the current regular period, via the one or more hardware processors, using the determined markdown demand and the inventory data (314).

2. The processor implemented method of claim 1, wherein the identification of the first set of products (400) comprises:

identifying a set of product metric for each of the plurality of products from the plurality of product information, wherein the set of product metric comprises an average price, a standard deviation and percentage sales (402);
computing a fitness score for each of the plurality of products using the plurality of inputs and the identified set of product metric (404); and
identifying the first set of products using the computed fitness score based on the fitness threshold and the markdown sale criteria (406).

3. The processor implemented method of claim 1, wherein the binary mapping technique comprises of assigning an attribute matching score based on a comparison between the first set of products and the plurality of product from the current regular period, wherein the attribute matching score is assigned based on a season attribute, a gender attribute, a category attribute, a sub-category attribute, an item description attribute, and a price attribute.

4. The processor implemented method of claim 1, wherein the estimation of the set of behavioral model parameters (500) comprises:

identifying a regular price, a markdown price, a regular demand, a markdown demand, a no-purchase demand, a combined regular price, a combined markdown price, a combined regular demand, a combined markdown demand and a combined no-purchase demand for the set of similar products (502);
estimating a perceived service level and an actual service level for the historic markdown period based on a minimum estimation error, wherein the minimum estimation error is heuristic technique given by identifying a value from a range of values to give a minimum error (504); and

estimating the customer regret parameter and the set of reservation price parameters using the combined regular price, the combined markdown price, the combined regular demand, the combined markdown demand, the combined no-purchase demand, the perceived service level and the actual service level based on a constraint non-linear optimization technique, wherein the set of reservation price parameters includes a pair of Weibull distribution parameters ($\lambda$, $k$) and a threshold reservation price ($v_1$)(506).

5. The processor implemented method of claim 1, wherein the scaling technique comprises of multiplying a scale factor with the set of reservation price parameters to obtain a set of scaled reservation price parameters and a potential market size, wherein the scale factor is a ratio between price of current regular period and the historic regular period.

6. The processor implemented method of claim 1, the markdown demand is determined as follows:

$$N_m(P_m) = N_{new}(F(v_{1_{new}}) - F(P_m)) = N_{new}\left(e^{-\left(\frac{P_m}{\lambda_{new}}\right)^k} - e^{-\left(\frac{v_{1_{new}}}{\lambda_{new}}\right)^k}\right)$$

where,

$N_m$ is the markdown demand,
$P_m$ is the markdown price,
$F(x) = 1 - e^{-(x/\lambda_{new})^k}$ is the cumulative distribution function of the reservation price,
$\lambda_{new}$ and $k$ are Weibull distribution parameters,
$N_{new}$ is the potential market size, and
$v_{1_{new}}$ is the threshold reservation price.

7. A system (100) comprising:

a memory (102) storing instructions;
one or more communication interfaces (106); and
one or more hardware processors (104) coupled to the memory (102) via the one or more communication interfaces (106), wherein the one or more hardware processors (104) are configured by the instructions to:

receive a plurality of inputs from a plurality of sources, via one or more hardware processors, wherein the plurality of inputs is associated with seasonal fashion apparels and comprises a set of transactional information and a plurality of product information associated with a plurality of products for a current regular period, a historic regular period and a historic markdown period, a fitness threshold, a markdown sale criteria, and an inventory data;
identify a first set of products from the plurality of products using the plurality of inputs based on a fitness score via the one or more hardware processors, wherein the first set of products comprises of seasonal fashion apparels sold in the historic regular period and the historic markdown period;
identify a set of similar products from the identified first set of products, via the one or more hardware processors, based on a binary mapping technique using the plurality of product information from the current regular period;
estimate a set of behavioral model parameters using the set of similar products, via the one or more hardware processors, wherein the set of behavioral model parameters comprises a customer regret parameter and a set of reservation price parameters;
update the set of reservation price parameters to obtain a set of scaled reservation price parameters and a potential market size, via the one or more hardware processors, using the plurality of product information for the current regular period and the historic regular period based on a scaling technique;
determine a markdown demand for the plurality of products from the current regular period, via the one or more hardware processors, using the set of scaled distribution parameters, the potential market size, and the customer regret parameter; and
estimate an optimal markdown price for the plurality of products from the current regular period, via the one or more hardware processors, using the determined markdown demand and the inventory data.

8. The system (100) of claim 7, wherein the identification of the first set of products comprises:

identifying a set of product metric for each of the plurality of products from the plurality of product information, wherein the set of product metric comprises an average price, a standard deviation and percentage sales;
computing a fitness score for each of the plurality of products using the plurality of inputs and the identified set of product metric; and
identifying the first set of products using the computed fitness score based on the fitness threshold and the markdown sale criteria.

9.  The system (100) of claim 7, wherein the binary mapping technique comprises of assigning an attribute matching score based on a comparison between the first set of products and the plurality of product from the current regular period, wherein the attribute matching score is assigned based on a season attribute, a gender attribute, a category attribute, a sub-category attribute, an item description attribute, and a price attribute.

10. The system (100) of claim 7, wherein the estimation of the set of behavioral model parameters comprises:

    identifying a regular price, a markdown price, a regular demand, a markdown demand, a no-purchase demand, a combined regular price, a combined markdown price, a combined regular demand, a combined markdown demand and a combined no-purchase demand for the set of similar products;
    estimating a perceived service level and an actual service level for the historic markdown period based on a minimum estimation error, wherein the minimum estimation error is heuristic technique given by identifying a value from a range of values to give a minimum error; and
    estimating the customer regret parameter and the set of reservation price parameters using the combined regular price, the combined markdown price, the combined regular demand, the combined markdown demand, the combined no-purchase demand, the perceived service level and the actual service level based on a constraint non-linear optimization technique, wherein the set of reservation price parameters includes a pair of Weibull distribution parameters ($\lambda$, $k$) and a threshold reservation price ($v_1$);

11. The system (100) of claim 7, wherein the scaling technique comprises of multiplying a scale factor with the set of reservation price parameters to obtain a set of scaled reservation price parameters and a potential market size, wherein the scale factor is a ratio between price of current regular period and the historic regular period.

12. The system (100) of claim 7, the markdown demand is determined as follows:

$$N_m(P_m) = N_{new}(F(v_{1_{new}}) - F(P_m)) = N_{new}(e^{-\left(\frac{P_m}{\lambda_{new}}\right)^k} - e^{-\left(\frac{v_{1_{new}}}{\lambda_{new}}\right)^k})$$

wherein,

$N_m$ is the markdown demand,
$P_m$ is the markdown price,
$F(x) = 1 - e^{-(x/\lambda_{new})^k}$ is the cumulative distribution function of the reservation price,
$\lambda_{new}$ and $k$ are Weibull distribution parameters,
$N_{new}$ is the potential market size, and
$v_{1_{new}}$ is the threshold reservation price.

13. One or more non-transitory machine-readable information storage mediums comprising one or more instructions which when executed by one or more hardware processors cause:

    receiving a plurality of inputs from a plurality of sources, wherein the plurality of inputs is associated with seasonal fashion apparels and comprises a set of transactional information and a plurality of product information associated with a plurality of products for a current regular period, a historic regular period and a historic markdown period, a fitness threshold, a markdown sale criteria, and an inventory data;
    identifying a first set of products from the plurality of products using the plurality of inputs based on a fitness score, wherein the first set of products comprises of seasonal fashion apparels sold in the historic regular period and the historic markdown period, wherein the identification of the first set of products comprises:

        identifying a set of product metric for each of the plurality of products from the plurality of product information, wherein the set of product metric comprises an average price, a standard deviation and percentage sales;
        computing a fitness score for each of the plurality of products using the plurality of inputs and the identified set of product metric; and
identifying the first set of products using the computed fitness score based on the fitness threshold and the markdown sale criteria;

identifying a set of similar products from the identified first set of products, based on a binary mapping technique using the plurality of product information from the current regular period, wherein the binary mapping technique comprises of assigning an attribute matching score based on a comparison between the first set of products and the plurality of product from the current regular period and, wherein the attribute matching score is assigned based on a season attribute, a gender attribute, a category attribute, a sub-category attribute, an item description attribute, and a price attribute;
estimating a set of behavioral model parameters using the identified set of similar products, wherein the set of behavioral model parameters comprises a customer regret parameter and a set of reservation price parameters, wherein the estimation of the set of behavioral model parameters comprises:

identifying a regular price, a markdown price, a regular demand, a markdown demand, a no-purchase demand, a combined regular price, a combined markdown price, a combined regular demand, a combined markdown demand and a combined no-purchase demand for the set of similar products;
estimating a perceived service level and an actual service level for the historic markdown period based on a minimum estimation error, wherein the minimum estimation error is heuristic technique given by identifying a value from a range of values to give a minimum error; and
estimating the customer regret parameter and the set of reservation price parameters using the combined regular price, the combined markdown price, the combined regular demand, the combined markdown demand, the combined no-purchase demand, the perceived service level and the actual service level based on a constraint non-linear optimization technique, wherein the set of reservation price parameters includes a pair of Weibull distribution parameters ($\lambda$, $k$) and a threshold reservation price ($v_1$);

updating the set of reservation price parameters to obtain a set of scaled reservation price parameters and a potential market size, using the plurality of product information for the current regular period and the historic regular period based on a scaling technique;
determining a markdown demand for the plurality of products of the current regular period, using the set of scaled distribution parameters, the potential market size and the customer regret parameter; and
estimating an optimal markdown price for the plurality of products of the current regular period, using the determined markdown demand and the inventory data.

14. The one or more non-transitory machine-readable information storage mediums of claim 13, wherein the scaling technique comprises of multiplying a scale factor with the set of reservation price parameters to obtain a set of scaled reservation price parameters and a potential market size, wherein the scale factor is a ratio between price of current regular period and the historic regular period.

15. The one or more non-transitory machine-readable information storage mediums of claim 13, the markdown demand is determined as follows:

$$N_m(P_m) = N_{new}(F(v_{1_{new}}) - F(P_m)) = N_{new}\left(\mathrm{e}^{-\left(\frac{P_m}{\lambda_{new}}\right)^k} - \mathrm{e}^{-\left(\frac{v_{1_{new}}}{\lambda_{new}}\right)^k}\right)$$

where,

$N_m$ is the markdown demand,
$P_m$ is the markdown price,
$F(x) = 1 - e^{-(x/\lambda_{new})^k}$ is the cumulative distribution function of the reservation price,
$\lambda_{new}$ and $k$ are Weibull distribution parameters,
$N_{new}$ is the potential market size, and
$v_{1_{new}}$ is the threshold reservation price.

FIG. 1

Plurality of inputs → **INPUT MODULE** 202 → **FIRST SET OF PRODUCTS IDENTIFIER** 204 → **SET OF SIMILAR PRODUCTS IDENTIFIER** 206 → **BEHAVIORAL MODEL PARAMETERS ESTIMATOR** 208

Optimal markdown price ← **OPTIMAL MARKDOWN PRICE ESTIMATOR** 214 ← **MARKDOWN DEMAND DETERMINER** 212 ← **UPDATER** 210

100

FIG. 2

receiving a plurality of inputs from a plurality of sources, via one or more hardware processors, wherein the plurality of inputs is associated with seasonal fashion apparels and comprises a set of transactional information and a plurality of product information associated with a plurality of products for a current regular period, a historic regular period and a historic markdown period, a fitness threshold, a markdown sale criteria, and an inventory data

302

identifying a first set of products from the plurality of products using the plurality of inputs based on a fitness score via the one or more hardware processors, wherein the first set of products comprises of seasonal fashion apparels sold in the historic regular period and the historic markdown period

304

identifying a set of similar products from the identified first set of products, via the one or more hardware processors, based on a binary mapping technique using the plurality of product information from the current regular period

306

300

A

FIG. 3A

Ⓐ

estimating a set of behavioral model parameters using the identified set of similar products, via the one or more hardware processors, wherein the set of behavioral model parameters comprises a regret parameter and a set of reservation price parameters 〜308

updating the set of reservation price parameters to obtain a set of scaled reservation price parameters and a potential market size, via the one or more hardware processors, using the plurality of product information for the current regular period and the historic regular period based on a scaling technique 〜310

determining a markdown demand for the plurality of products of the current regular period, via the one or more hardware processors, using the set of scaled distribution parameters, the potential market size and the regret parameter 〜312

estimating an optimal markdown price for the plurality of products of the current regular period, via the one or more hardware processors, using the determined markdown demand and the inventory data 314

300

FIG. 3B

identifying a set of product metric for each of the plurality of products from the plurality of product information, wherein the set of product metric comprises an average price, a standard deviation and percentage sales — 402

computing a fitness score for each of the plurality of products using the plurality of inputs and the identified set of product metric — 404

identifying the first set of products using the computed fitness score based on the fitness threshold and the markdown sale criteria — 406

400

**FIG. 4**

identifying a regular price, a markdown price, a regular demand, a markdown demand, a no-purchase demand, a combined regular price, a combined markdown price, a combined regular demand, a combined markdown demand and a combined no-purchase demand for the set of similar products ⎬502

estimating a perceived service level and an actual service level for the historic markdown period based on a minimum estimation error, wherein the minimum estimation error is a heuristic technique given by identifying a value from a range of values to give a minimum error ⎬504

estimating the customer regret parameter and the set of reservation price parameters using the combined regular price, the combined markdown price, the combined regular demand, the combined markdown demand, the combined no-purchase demand, the perceived service level and the actual service level based on a constraint non-linear optimization technique, wherein the set of reservation price parameters includes a pair of Weibull distribution parameters and a threshold reservation price ⎬506

500

FIG. 5

Europäisches
Patentamt

European
Patent Office

Office européen
des brevets

# EUROPEAN SEARCH REPORT

Application Number

EP 23 20 4950

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/103458 A1 (GUPTE MANISH [US] ET AL) 25 April 2013 (2013-04-25) | 1-3,7-9, 13 | INV. G06Q10/04 |
| Y | * paragraph [0001] * <br> * paragraph [0003] - paragraph [0004] * <br> * paragraph [0010] - paragraph [0012] * <br> * paragraph [0014] * <br> * paragraph [0023] * <br> * paragraph [0027] - paragraph [0028] * <br> * paragraph [0030] * <br> * paragraph [0032] * <br> * paragraph [0036] * <br> * paragraph [0039] * <br> * paragraph [0041] * <br> * paragraph [0044] - paragraph [0045] * <br> * paragraph [0051] - paragraph [0052] * <br> * figures 3, 4 * | 4-6, 10-12, 14,15 | G06Q30/0201 G06Q30/0283 |
| Y | ÖZER ÖZALP ET AL: "Markdown or Everyday-Low-Price? The Role of Consumer Regret and Availability Misperception", SSRN ELECTRONIC JOURNAL, 1 January 2013 (2013-01-01), XP093138628, US ISSN: 1556-5068, DOI: 10.2139/ssrn.2212888 | 4-6, 10-12, 14,15 | |
| A | * abstract * <br> * page 326, column 1 - page 328, column 2 * <br> * page 329, column 2 - page 330, column 2 * <br> * page 332, column 1 - page 333, column 1 * <br> -----<br> -/-- | 1-3,7-9, 13 | |

TECHNICAL FIELDS
SEARCHED      (IPC)

G06Q

The present search report has been drawn up for all claims

| Place of search | Date of completion of the search | Examiner |
|---|---|---|
| Munich | 7 March 2024 | Bharucha, Zubin |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

Europäisches
Patentamt

European
Patent Office

Office européen
des brevets

## EUROPEAN SEARCH REPORT

Application Number

EP 23 20 4950

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2022/031269 A1 (WALMART APOLLO LLC [US]) 10 February 2022 (2022-02-10) * paragraph [0001] - paragraph [0002] * * paragraph [0004] - paragraph [0007] * * paragraph [0013] * * paragraph [0051] * * paragraph [0059] - paragraph [0060] * * paragraph [0078] - paragraph [0081] * * figure 9 * ----- | 1-15 | |
| | | | **TECHNICAL FIELDS SEARCHED (IPC)** |

The present search report has been drawn up for all claims

| Place of search | Date of completion of the search | Examiner |
|---|---|---|
| Munich | 7 March 2024 | Bharucha, Zubin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

## ANNEX TO THE EUROPEAN SEARCH REPORT
## ON EUROPEAN PATENT APPLICATION NO.

EP 23 20 4950

This annex lists the patent family members relating to the patent documents cited in  the above-mentioned European search report.
The members are as contained in the European Patent Office EDP file on
The European Patent Office is in no way liable for these particulars which are merely given for the purpose of information.

07-03-2024

| Patent document cited in search report | Publication date | Patent family member(s) | Publication date |
|---|---|---|---|
| US 2013103458 A1 | 25-04-2013 | NONE | |
| WO 2022031269 A1 | 10-02-2022 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202221070162